(19) 

Europäisches
Patentamt
European
Patent Office
Office européen
des brevets

(11) **EP 4 546 141 A1**

(12) **EUROPEAN PATENT APPLICATION**
published in accordance with Art. 153(4) EPC

(43) Date of publication:
**30.04.2025 Bulletin 2025/18**

(21) Application number: **23887669.2**

(22) Date of filing: **22.09.2023**

(51) International Patent Classification (IPC):
***G06F 11/30*** (2006.01)

(52) Cooperative Patent Classification (CPC):
**G06F 11/30;** Y02D 10/00

(86) International application number:
**PCT/CN2023/120658**

(87) International publication number:
**WO 2024/098975 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 CN 202211405854**

(71) Applicant: **Honor Device Co., Ltd.
Shenzhen, Guangdong 518040 (CN)**

(72) Inventors:
• **SHANG, Ming
Shenzhen, Guangdong 518040 (CN)**
• **WANG, Yingming
Shenzhen, Guangdong 518040 (CN)**
• **XIANG, Chao
Shenzhen, Guangdong 518040 (CN)**

(74) Representative: **Epping - Hermann - Fischer
Patentanwaltsgesellschaft mbH
Schloßschmidstraße 5
80639 München (DE)**

(54) **POWER CONSUMPTION CONTROL METHOD AND RELATED APPARATUS**

(57)     Embodiments of this application provide a power consumption control method and a related apparatus, and relate to the field of terminal technologies. The method includes: A terminal device opens a first application, where at a first moment, a CPU power consumption parameter PL1 is a first value, and the first application lags; at a second moment, the CPU power consumption parameter PL1 is a third value, where the second moment is later than the first moment, and the third value is greater than the first value; and starting from the second moment, after first preset duration, at a third moment, the CPU power consumption parameter PL1 is a fourth value, where the fourth value is greater than the first value, the fourth value is less than the third value, and a load level is a first level between the first moment and the third moment; and the terminal device exits the first application, and opens the first application again, where if the load level of the terminal device is the first level, the CPU power consumption parameter PL1 is the fourth value. In this way, by adjusting the CPU power consumption parameter PL1 for the application, application lag can be reduced, and user experience can be improved.

A terminal device opens a first application, where when a load level of the terminal device is a first level, a CPU power consumption parameter PL1 is a first value, or when a load level of the terminal device is a second level, a CPU power consumption parameter PL1 is a second value — S601

At a first moment, the CPU power consumption parameter PL1 is the first value, and the first application lags — S602

At a second moment, the CPU power consumption parameter PL1 is a third value, where the second moment is later than the first moment, and the third value is greater than the first value — S603

Starting from the second moment, after first preset duration, at a third moment, the CPU power consumption parameter PL1 is a fourth value, where the fourth value is greater than the first value, the fourth value is less than the third value, and the load level is the first level between the first moment and the third moment — S604

At a fourth moment, the CPU power consumption parameter PL1 is the second value, and the first application lags — S605

At a fifth moment, the CPU power consumption parameter PL1 is a fifth value, where the fifth moment is later than the fourth moment, and the fifth value is greater than the second value — S606

Starting from the fifth moment, after second preset duration, at a sixth moment, the CPU power consumption parameter PL1 is a sixth value, where the sixth value is greater than the second value, the sixth value is less than the fifth value, and the load level is the second level between the fourth moment and the sixth moment — S607

At a seventh moment, the terminal device exits the first application, and opens the first application again, where if the load level of the terminal device is the first level, the CPU power consumption parameter PL1 is the fourth value, or if the load level of the terminal device is the second level, the CPU power consumption parameter PL1 is the sixth value, where the seventh moment is later than the sixth moment — S608

FIG. 6

EP 4 546 141 A1

# EP 4 546 141 A1

## Description

This application claims priority to Chinese Patent Application No. 202211405854.9, filed with the China National Intellectual Property Administration on November 10, 2022 and entitled "POWER CONSUMPTION CONTROL METHOD AND RELATED APPARATUS", which is incorporated herein by reference in its entirety.

## TECHNICAL FIELD

This application relates to the field of terminal technologies, and in particular, to a power consumption control method and a related apparatus.

## BACKGROUND

As performance of a terminal device improves, the terminal device can simultaneously process tasks in a plurality of applications, resulting in increasingly high power consumption of the terminal device. To limit the power consumption, the terminal device usually needs to reduce power consumption of some applications in a running process. However, if power consumption of an application is excessively low, the application may be prone to lag, or even lag cannot be recovered, degrading user experience.

In some implementations, when an application lags, the terminal device may increase power consumption of the application, so that the application runs in a high-performance state. However, the application may still frequently lag.

## SUMMARY

Embodiments of this application provide a power consumption control method and a related apparatus. When a Windows foreground application lags, a terminal device may increase PL1 in the application scene to a relatively large value in a preset time period, and in the preset time period, may perform power consumption sampling on a CPU, to obtain an actual CPU power consumption value, and calculate a CPU power consumption adaptation value in the preset time period based on the CPU power consumption value obtained through sampling. The CPU power consumption adaptation value may include, for example, an average CPU power consumption value or some values around an average CPU power consumption value. Further, the terminal device may set PL1 in the application scene to the CPU power consumption adaptation value, so that a user performs an operation more smoothly in the application scene, to reduce a lag phenomenon, optimize system performance, and improve user experience.

According to a first aspect, an embodiment of this application provides a power consumption control method. The method includes:

A terminal device opens a first application, where when a load level of the terminal device is a first level, a CPU power consumption parameter PL1 is a first value, or when a load level of the terminal device is a second level, a CPU power consumption parameter PL1 is a second value; at a first moment, the CPU power consumption parameter PL1 is the first value, and the first application lags; at a second moment, the CPU power consumption parameter PL1 is a third value, where the second moment is later than the first moment, and the third value is greater than the first value; starting from the second moment, after first preset duration, at a third moment, the CPU power consumption parameter PL1 is a fourth value, where the fourth value is greater than the first value, the fourth value is less than the third value, and the load level is the first level between the first moment and the third moment; at a fourth moment, the CPU power consumption parameter PL1 is the second value, and the first application lags; at a fifth moment, the CPU power consumption parameter PL1 is a fifth value, where the fifth moment is later than the fourth moment, and the fifth value is greater than the second value; and starting from the fifth moment, after second preset duration, at a sixth moment, the CPU power consumption parameter PL1 is a sixth value, where the sixth value is greater than the second value, the sixth value is less than the fifth value, and the load level is the second level between the fourth moment and the sixth moment; and at a seventh moment, the terminal device exits the first application, and opens the first application again, where if the load level of the terminal device is the first level, the CPU power consumption parameter PL1 is the fourth value, or if the load level of the terminal device is the second level, the CPU power consumption parameter PL1 is the sixth value, where the seventh moment is later than the sixth moment. In this way, the application may adapt to a more suitable CPU power consumption parameter PL1 during lag, so that a user performs an operation more smoothly in the application scene, to reduce a lag phenomenon, optimize system performance, and improve user experience.

In a possible implementation, the method includes: collecting CPU power consumption between the second moment and the third moment based on a first sampling period, to obtain N CPU power consumption values; determining a first CPU power consumption adaptation value based on the N CPU power consumption values; obtaining a first offset, where the first offset is a difference between the first CPU power consumption adaptation value and the first value, and after the third moment, exiting, by the terminal device, the first application, and opening the first application again, wherein if the load level of the terminal device is the first level, the CPU power consumption parameter PL1 is the fourth value obtained by adding the first value and the first offset. In this way, the terminal device may obtain, by sampling actual CPU power consumption, different CPU power consumption adaptation values corresponding to different applications when the load level is the first level. In a process of running the application, a value of the CPU power consumption parameter PL1 is increased, so that each application can have a more suitable CPU power consumption limit, to reduce application lag and improve user experience.

In a possible implementation, the method includes: collecting CPU power consumption between the fifth moment and the sixth moment based on a second sampling period, to obtain M CPU power consumption values; determining a second CPU power consumption adaptation value based on the M CPU power consumption values; obtaining a second offset, where the second offset is a difference between the second CPU power consumption adaptation value and the second value, and after the sixth moment, exiting, by the terminal device, the first application, and opening the first application again, wherein if the load level of the terminal device is the second level, the CPU power consumption parameter PL1 is the sixth value obtained by adding the second value and the second offset. In this way, the terminal device may obtain, by sampling actual CPU power consumption, different CPU power consumption adaptation values corresponding to different applications when the load level is the second level, so that each application can have a more suitable CPU power consumption limit, to reduce application lag and improve user experience.

In a possible implementation, the CPU power consumption parameter PL1 value of the first application is controlled by a second application, the first offset and the second offset are managed by the second application, and the method may further include: resetting both the first offset and the second offset when the second application is exited. In this way, the power consumption control method in this embodiment of this application may be performed in a plurality of management applications in the terminal device. The method has a relatively wide application range, and is generally applicable, making it more convenient to control and manage CPU power consumption of each application in the terminal device, thereby improving performance of the terminal device. In a possible implementation, the method includes: At an eighth moment, the terminal device exits the second application, and opens the second application again, where the eighth moment is later than the seventh moment; and at a ninth moment, the terminal device opens the first application, where when the load level of the terminal device is the first level, the CPU power consumption parameter PL1 is the first value, or when the load level of the terminal device is the second level, the CPU power consumption parameter PL1 is the second value; and the ninth moment is later than the eighth moment. In this way, an initial preset value of PL1 is restored, so that a CPU power consumption value corresponding to each application is not always a relatively large value, to reduce power consumption of the terminal device and improve performance of the terminal device. In a possible implementation, the second application may include a system performance monitoring module, a scene scheduling module, and a CPU power consumption collection module; between the first moment and the second moment, the system performance monitoring module determines that the lag event is a user-perceivable lag event; at the second moment, the scene scheduling module sets the CPU power consumption parameter PL1 to the third value; starting from the second moment, within the first preset duration, the scene scheduling module performs power consumption sampling on a CPU through the CPU power consumption collection module; at the third moment, the scene scheduling module sets the CPU power consumption parameter PL1 to the fourth value; between the fourth moment and the fifth moment, the system performance monitoring module determines that the lag event is a user-perceivable lag event; at the fifth moment, the scene scheduling module sets the CPU power consumption parameter PL1 to the fifth value; starting from the fifth moment, within the second preset duration, the scene scheduling module performs power consumption sampling on the CPU through the CPU power consumption collection module; at the sixth moment, the scene scheduling module sets the CPU power consumption parameter PL1 to the sixth value; and at the seventh moment, the terminal device exits the first application, and opens the first application again, and if the load level of the terminal device is the first level, the scene scheduling module sets the CPU power consumption parameter PL1 to the fourth value, or if the load level of the terminal device is the second level, the scene scheduling module sets the CPU power consumption parameter PL1 to the sixth value. In this way, the second application sets adaptive CPU power consumption values for different application scenes through mutual coordination of different modules, so that the application runs more smoothly, to reduce a lag phenomenon, optimize system performance, and improve user experience.

In a possible implementation, that the system performance monitoring module determines that the lag event is a user-perceivable lag event may include: When a delay of the lag event exceeds third preset duration, the system performance monitoring module determines, based on an event flag Flags, that the lag event is a user-perceivable lag event. In this way, the user-perceivable lag event may be accurately identified, and when the user-perceivable lag event occurs, the CPU power consumption parameter PL1 may be adjusted, to reduce application lag.

In a possible implementation, a lag type of the lag may include one or more of the following: mouse delay lag, input delay lag, and window unresponsiveness lag. In this way, application power consumption control is performed for user-perceivable lag, to reduce a probability of application lag and improve user experience.

In a possible implementation, when the load level of the terminal device remains unchanged, different application scenes correspond to different CPU power consumption parameters PL1. In this way, different applications correspond to different CPU power consumption parameters PL1, so that each application can have a more suitable CPU power consumption limit, to reduce application lag and improve user experience.

According to a second aspect, an embodiment of this application provides a power consumption control apparatus. The power consumption control apparatus may be a terminal device, or may be a chip or a chip system in a terminal device. The power consumption control apparatus may include a processing unit. The processing unit is configured to implement any processing-related method performed by the terminal device in the first aspect or any possible implementation of the first aspect. When the power consumption control apparatus is a terminal device, the processing unit may be a processor. The power consumption control apparatus may further include a storage unit, and the storage unit may be a storage. The storage unit is configured to store instructions. The processing unit executes the instructions stored in the storage unit, to enable the terminal device to implement the method described in the first aspect or any possible implementation of the first aspect. When the power consumption control apparatus is a chip or a chip system in a terminal device, the processing unit may be a processor. The processing unit executes the instructions stored in the storage unit, to enable the terminal device to implement the method described in the first aspect or any possible implementation of the first aspect. The storage unit may be a storage unit (for example, a register or a cache) in the chip, or may be a storage unit (for example, a read-only memory or a random access memory) that is in the terminal device and that is located outside the chip.

In a possible implementation, the processing unit is configured to set a CPU power consumption parameter PL1 for an application.

In a possible implementation, the processing unit is configured to collect CPU power consumption based on a first sampling period, to obtain N CPU power consumption values; is further configured to determine a first CPU power consumption adaptation value based on the N CPU power consumption values; and is further specifically configured to obtain a first offset.

In a possible implementation, the processing unit is configured to collect CPU power consumption based on a second sampling period, to obtain M CPU power consumption values; is further configured to determine a second CPU power consumption adaptation value based on the M CPU power consumption values; and is further specifically configured to obtain a second offset.

In a possible implementation, the processing unit is configured to reset both the first offset and the second offset when a second application is exited.

In a possible implementation, the processing unit is configured to: when the terminal device exits the second application, and opens the second application again, set the CPU power consumption parameter PL1 for the application.

In a possible implementation, the processing unit is configured to determine that a lag event is a user-perceivable lag event; is further configured to: set the CPU power consumption parameter PL1 to a third value, set the CPU power consumption parameter PL1 to a fourth value, set the CPU power consumption parameter PL1 to a fifth value, and set the CPU power consumption parameter PL1 to a sixth value; and is further specifically configured to perform power consumption sampling on a CPU through a CPU power consumption collection module.

In a possible implementation, the processing unit is configured to: when a delay of the lag event exceeds third preset duration, determine, based on an event flag Flags, that the lag event is a user-perceivable lag event.

In a possible implementation, a lag type of the lag may include one or more of the following: mouse delay lag, input delay lag, and window unresponsiveness lag.

In a possible implementation, when the load level of the terminal device remains unchanged, different application scenes correspond to different CPU power consumption parameters PL1.

According to a third aspect, an embodiment of this application provides a terminal device, including a processor and a storage. The storage is configured to store code instructions, and the processor is configured to run the code instructions to perform the power consumption control method described in the first aspect or any possible implementation of the first aspect.

According to a fourth aspect, an embodiment of this application provides a computer-readable storage medium. The computer-readable storage medium stores a computer program or instructions. When the computer program or the instructions are run on a computer, the computer is enabled to perform the power consumption control method described in the first aspect or any possible implementation of the first aspect.

According to a fifth aspect, an embodiment of this application provides a computer program product including a computer program. When the computer program is run on a computer, the computer is enabled to perform the power consumption control method described in the first aspect or any possible implementation of the first aspect.

According to a sixth aspect, this application provides a chip or a chip system. The chip or the chip system includes at least one processor and a communication interface. The communication interface and the at least one processor are connected to each other through a line. The at least one processor is configured to run a computer program or instructions to perform the power consumption control method described in the first aspect or any possible implementation of the first aspect. The communication interface in the chip may be an input/output interface, a pin, a circuit, or the like.

In a possible implementation, the chip or the chip system described above in this application further includes at least one storage, and the at least one storage stores instructions. The storage may be a storage unit, for example, a register or a cache, inside the chip, or may be a storage unit (for example, a read-only memory or a random access memory) of the chip.

It should be understood that technical solutions of the second aspect to the sixth aspect of this application correspond to those of the first aspect of this application, and beneficial effects achieved in these aspects and corresponding feasible implementations are similar. Details are not described again.

**BRIEF DESCRIPTION OF DRAWINGS**

FIG. 1 is a schematic diagram of a structure of a terminal device according to an embodiment of this application;

FIG. 2 is a schematic diagram of a software structure of a terminal device according to an embodiment of this application;

FIG. 3 is a schematic diagram of a solution framework of a power consumption control method according to an embodiment of this application;

FIG. 4 is a schematic flowchart of a power consumption control method in an office scene according to an embodiment of this application;

FIG. 5 is a schematic flowchart of a power consumption control method in a browser scene according to an embodiment of this application;

FIG. 6 is a schematic diagram of a specific power consumption control method according to an embodiment of this application;

FIG. 7 is a schematic diagram of a numerical change of adjusting a CPU power consumption parameter PL1 according to an embodiment of this application; and

FIG. 8 is a schematic diagram of a structure of a chip according to an embodiment of this application.

**DESCRIPTION OF EMBODIMENTS**

To clearly describe the technical solutions in the embodiments of this application, the following briefly describes some terms and technologies in the embodiments of this application.

1. PL1: PL is a power limit (power limit, PL), and PL1 may represent a function loss limit of a central processing unit (central processing unit, CPU), which may also be referred to as a CPU power consumption limit or a CPU power consumption parameter. Because there is different power consumption of the CPU in different application scenes, each application scene may correspond to a CPU power consumption parameter PL1 in each application scene. When an application in each application scene runs, power consumption of the CPU cannot exceed the CPU power consumption parameter PL1 in the application scene. The CPU power consumption parameter PL1 may also be briefly referred to as PL1.

2. Load level and PL1: Load of a terminal device may be classified into different levels based on performance data such as a CPU of the terminal device. For example, when utilization of the CPU is less than or equal to 20%, there may be a load level of light load; when utilization of the CPU is greater than 20% and is less than or equal to 50%, there may be a load level of medium load; or when utilization of the CPU is greater than 50%, there may be a load level of heavy load. A method for specifically classifying the load level is not limited in the embodiments of this application. Based on different load levels of the terminal device, different initial values of PL1 at the load levels may be set in different application scenes.

For example, in an application scene A, different load levels may correspond to different initial values of PL1. For example, when the terminal device has light load, an initial value of PL1 corresponding to the application scene A may be A1; when the terminal device has medium load, an initial value of PL1 corresponding to the application scene A may be A2; or when the terminal device has heavy load, an initial value of PL1 corresponding to the application scene A may be A3.

Herein, A1 is less than A2, and A2 is less than A3.

In an application scene B, different load levels may correspond to different initial values of PL1. For example, when the terminal device has light load, an initial value of PL1 corresponding to the application scene B may be B1; when the terminal device has medium load, an initial value of PL1 corresponding to the application scene B may be B2; or when the terminal device has heavy load, an initial value of PL1 corresponding to the application scene B may be B3. Herein, B1 is less than B2, and B2 is less than B3.

A specific relationship between the load level of the terminal device and the initial value of PL1 corresponding to the application scene may be shown in Table 1.

**Table 1**

| Load level of the terminal device | Light load | Medium load | Heavy load |
|---|---|---|---|
| PL1 in the application scene A | A1 | A2 | A3 |
| PL1 in the application scene B | B1 | B2 | B3 |

3. An IPC message is an inter-process communication (inter process communication, IPC) message, and the IPC message may be transmitted between two processes.

4. Terms

In the embodiments of this application, words such as "first" and "second" are used to distinguish between same items or similar items with basically same functions and effects. For example, a first chip and a second chip are merely used to distinguish between different chips, and are not intended to limit a sequence of the first chip and the second chip. A person skilled in the art may understand that the words such as "first" and "second" do not limit a quantity or an execution sequence, and the words such as "first" and "second" do not define a definite difference.

It should be noted that the words such as "example" or "for example" in the embodiments of this application are used to indicate an example, an illustration, or a description. Any embodiment or design solution described as "example" or "for example" in this application should not be construed as being preferred or advantageous over other embodiments or design solutions. Exactly, use of the words such as "example" or "for example" is intended to present a related concept in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

5. Terminal device

The terminal device in the embodiments of this application may alternatively be an electronic device in any form. For example, the electronic device may include a handheld device or a vehicle-mounted device. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a terminal, a wireless communication device, a user agent or a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, or a terminal device in a future evolved public land mobile network (public land mobile network, PLMN). This is not limited in the embodiments of this application.

As an example rather than a limitation, in the embodiments of this application, the terminal device may alternatively be a wearable device. The wearable device may also be referred to as a wearable smart device, and is a generic term for wearable devices such as glasses, gloves, watches, clothing, and shoes that are intelligently designed and developed from daily wears by using wearable technologies. The wearable device is a portable device that is worn directly on a body or integrated into clothing or an accessory of a user. The wearable device is not merely a hardware device, but implements powerful functions through software support, data interaction, and cloud interaction. In a broad sense, the wearable smart device includes a full-featured and large-size device that can implement all or some of functions without relying on a smartphone, for example a smartwatch or smart glasses, and a device that focuses only on a specific type of application function and needs to be used together with another device such as a smartphone, for example, various types of smart bands and smart jewelry that monitor physical signs.

In addition, in the embodiments of this application, the terminal device may alternatively be a terminal device in an internet of things (internet of things, IoT) system. IoT is an important part in future development of information technologies, and a main technical feature thereof is connecting a thing to a network through a communication technology, to implement an intelligent network of human-machine interconnection and interconnection between things.

In the embodiments of this application, the terminal device or each network device includes a hardware layer, a layer of an operating system that runs above the hardware layer, and an application layer that runs above the operating system layer. The hardware layer includes hardware such as a CPU, a memory management unit (memory management unit, MMU), and a memory (which is also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as Browser, Contacts, word processing software, and instant messaging software.

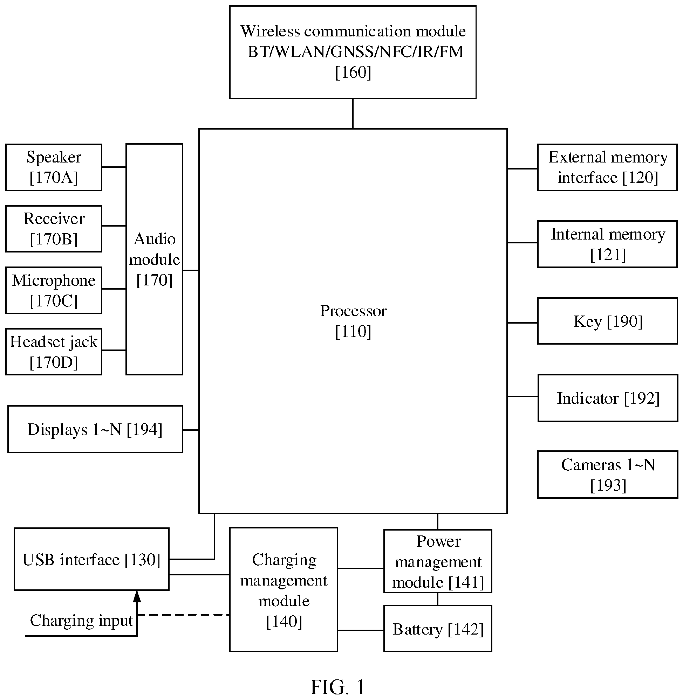

For example, FIG. 1 is a schematic diagram of a structure of a terminal device.

The terminal device may include a processor 110, an external memory interface 120, an internal memory 121, a universal serial bus (universal serial bus, USB) interface 130, a charging management module 140, a power management module 141, a battery 142, a wireless communication module 160, an audio module 170, a speaker 170A, a receiver 170B, a microphone 170C, a headset jack 170D, a key 190, an indicator 192, a camera 193, a display 194, and the like. It may be understood that the structure shown in this embodiment of the present invention does not constitute a specific limitation on the terminal device. In some other embodiments of this application, the terminal device may include more or fewer parts than those shown in the figure, combine some parts, split some parts, or have different part arrangements. The parts shown in the figure may be implemented by hardware, software, or a combination of software and hardware. The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the terminal device. The controller may generate an operation control signal based on instruction operation code and a timing signal, to complete control of instruction fetching and instruction execution. A storage may be further disposed in the processor 110 to store instructions and data. In some embodiments, the storage in the processor 110 is a cache memory. The storage may store instructions or data recently used or cyclically used by the processor 110. If the processor 110 needs to use the instructions or the data again, the processor 110 may directly invoke the instructions or the data from the storage. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, and/or the like.

It may be understood that an interface connection relationship between the modules shown in this embodiment of the present invention is merely an example for description, and does not constitute a limitation on the structure of the terminal device. In some other embodiments of this application, the terminal device may alternatively use an interface connection manner different from that in the foregoing embodiment, or use a combination of a plurality of interface connection manners.

The external memory interface 120 may be configured to be connected to an external memory card such as a Micro SD card, to expand a storage capacity of the terminal device. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and an address book) created during use of the terminal device, and the like. In addition, the internal memory 121 may include a high-speed random access memory, and may further include a nonvolatile memory, for example, at least one magnetic disk storage device, a flash memory device, or a universal flash storage (universal flash storage, UFS). The processor 110 performs various functional applications and data processing of the terminal device by running the instructions stored in the internal memory 121 and/or the instructions stored in the storage disposed in the processor. For example, in this embodiment of this application, the processor may run the instructions stored in the internal memory, to enable the terminal device to perform the power consumption control method provided in the embodiments of this application.

The USB interface 130 is an interface that complies with USB standard specifications, and may be specifically a Mini USB interface, a Micro USB interface, a USB Type C interface, or the like. The USB interface 130 may be configured to be connected to a charger to charge the terminal device, may be configured to transmit data between the terminal device and a peripheral device, or may be configured to be connected to a headset to play audio through the headset. The interface may alternatively be configured to be connected to another terminal device, for example, an AR device.

The charging management module 140 is configured to receive a charging input from a charger. The charger may be a wireless charger or a wired charger. When charging the battery 142, the charging management module 140 may further supply power to the terminal device through the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, an external storage 120, the display 194, the wireless communication module 160, and the like. In some embodiments, the power management module 141 and the charging management module 140 may alternatively be disposed in a same device.

The wireless communication module 160 may provide a wireless communication solution that is applied to the terminal device and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), infrared (infrared, IR), and the like.

The wireless communication module 160 may be one or more devices integrating at least one communication processing module. The wireless communication module 160 receives an electromagnetic wave through an antenna, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna.

The terminal device implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information. The terminal device may implement a shooting function by using the ISP, the camera 193, the video codec, the GPU, the display 194, the application processor, and the like.

The terminal device may implement an audio function, for example, audio playing or recording, by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The speaker 170A, also referred to as a "horn", is configured to convert an audio electrical signal into a sound signal, and the terminal device may include one or N speakers 170A, where N is a positive integer greater than 1. The terminal device may listen to music or a video or answer a call in a hands-free mode through the speaker 170A. The receiver 170B, also referred to as an "earpiece", is configured to convert an audio electrical signal into a sound signal. When the terminal device receives a call or a voice message, the receiver 170B may be placed close to a human ear to receive the voice. The microphone 170C, also referred to as a "mic" or "mike", is configured to convert a sound signal into an electrical signal. The headset jack 170D is configured to be connected to a wired headset.

The key 190 includes a power-on/off key, a volume key, or the like. The key 190 may be a mechanical key, or may be a touch key. The terminal device may receive a key input, and generate a key signal input related to user settings and function control of the terminal device.

The indicator 192 may be an indicator light, and may be configured to indicate a charging status, a power change, and the like.

The camera 193 is configured to capture a still image or a video. In some embodiments, the terminal device may include one or N cameras 193, where N is a positive integer greater than 1. The display 194 is configured to display an image, a video, and the like. The display 194 includes a display panel. In some embodiments, the terminal device may include one or N displays 194, where N is a positive integer greater than 1. The terminal device implements a display function by using the GPU, the display 194, the application processor, and the like. The GPU is a microprocessor for image processing, and is connected to the display 194 and the application processor.

A software system of the terminal device may use a layered architecture, an event-driven architecture, a microkernel architecture, a micro-service architecture, or a cloud architecture. In an embodiment of the present invention, a software structure of the terminal device is described by using a Windows system with a layered architecture as an example.

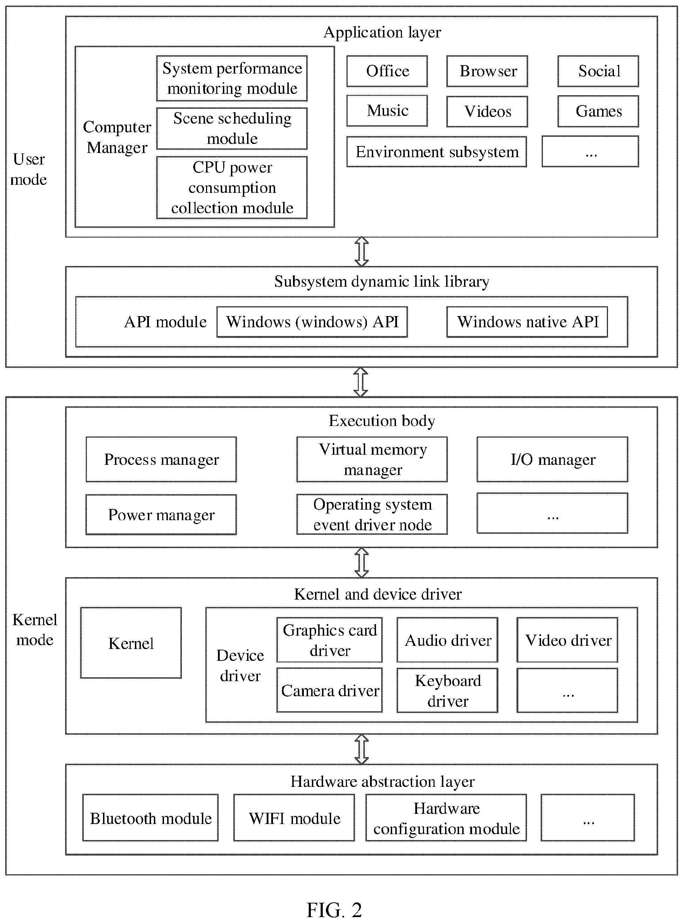

FIG. 2 is a block diagram of a software structure of a terminal device according to an embodiment of this application.

In a layered architecture, software is divided into several layers, and each layer has a clear role and task. The layers communicate with each other through software interfaces. In some embodiments, a Windows system is divided into a user mode and a kernel mode. The user mode includes an application layer and a subsystem dynamic link library. The kernel mode is divided from top to bottom into an execution body, a kernel and device driver, a hardware abstraction layer (hardware abstraction layer, HAL), and the like.

As shown in FIG. 2, the application layer includes applications such as Computer Manager, Office, Browser, Social, Music, Videos, and Games. The applications may include a system application and a third-party application. The application layer may further include an environment subsystem. The environment subsystem may display some subsets of basic execution body system services to an application in a specific form, and provide an execution environment for the application. In this embodiment of this application, the Computer Manager application may include a system performance monitoring module, a scene scheduling module, a CPU power consumption collection module, and the like.

The system performance monitoring module may include a lag detection module. The lag detection module may obtain a lag event in a system of the terminal device, and report the lag event to the scene scheduling module.

The scene scheduling module may include a scene identification module and a scheduling module.

The scene identification module may identify an application scene in which the terminal device is located, and determine a basic scheduling policy that matches the application scene. The scheduling module may obtain a load status of the terminal device, and determine, with reference to the load status of the terminal device and the basic scheduling policy, an actual scheduling policy that meets an actual running status of the terminal device. In addition, the scene scheduling module may further obtain a CPU power consumption value from the CPU power consumption collection module.

The CPU power consumption collection module may obtain the CPU power consumption value, and report the CPU power consumption value to the scene scheduling module.

The subsystem dynamic link library may include an application programming interface (application programming interface, API) module, and the API module includes a Windows API, a Windows native API, and the like. Both the Windows API and the Windows native API can provide a system call entry and internal function support for an application, but differ in that the Windows native API is a native API of the Windows system. For example, the Windows API may include user.dll or kernel.dll, and the Windows native API may include ntdll.dll. Herein, user.dll is an interface of a Windows user interface that can be used to perform operations such as creating a window and sending a message; kernel.dll is used to provide an interface for an application to access a kernel; and ntdll.dll is an important Windows NT kernel-level file. When Windows is started, ntdll.dll resides in a specific write-protected area in a memory, so that other programs cannot occupy this memory area.

The execution body may include a process manager, a virtual memory manager, an I/O manager, a power manager, an operating system event driver (operating system event driver, OsEventDriver) node, and the like.

The process manager is configured to create and abort a process and a thread.

The virtual memory manager implements a "virtual memory". The virtual memory manager also provides basic support for a cache manager.

The I/O manager performs device-independent input/output, performs further processing, and calls an appropriate device driver.

The power manager may manage power status changes of all devices that support changing of a power status.

The operating system event driver node may interact with a kernel-and-driver layer, for example, interact with a graphics card driver, and after determining that there is a GPU video decoding event, report the GPU video decoding event to a scene identification engine.

The kernel-and-driver layer includes the kernel and a device driver.

The kernel is an abstraction of a processor architecture, and isolates a difference between the execution body and the processor architecture, to ensure portability of the system. The kernel may perform thread arrangement and scheduling, trap handling, exception scheduling, interrupt processing and scheduling, and the like.

The device driver runs in a kernel mode, and is an interface between an I/O system and related hardware. The device driver may include the graphics card driver, an audio driver, a video driver, a camera driver, a keyboard driver, and the like.

The HAL is a kernel-mode module, can hide various hardware-related details, for example, an I/O interface, an interrupt controller, and a multi-processor communication mechanism, and provides a unified service interface for different hardware platforms that run Windows, to implement portability across a plurality of hardware platforms. It should be noted that to maintain the portability of Windows, internal components of Windows and user-written device drivers do not directly access the hardware, but by calling a routine in the HAL.

It should be noted that only the Windows system is used as an example for description in this embodiment of this application. In another operating system (for example, an Android system or an IOS system), the solutions of this application can also be implemented provided that functions implemented by the functional modules are similar to those in this embodiment of this application. As performance of a terminal device improves, the terminal device can simultaneously process tasks in a plurality of applications, resulting in increasingly high power consumption of the terminal device. To limit the power consumption, the terminal device usually needs to reduce power consumption of some applications in a running process. However, if power consumption of an application is excessively low, the application may be prone to lag, or even lag cannot be recovered, degrading user experience.

In some implementations, a management application in the terminal device may control power consumption of the application. The management application may include, for example, a Computer Manager application, a security management application, or the like. For ease of description, an example in which the Computer Manager application controls the power consumption is subsequently used for description.

For example, an initial value of PL1 in each application scene in the terminal device may be preset in the Computer Manager application in the terminal device. When each application runs, the Computer Manager application may control, based on a load level of the terminal device, PL1 in each application scene to be an initial value of PL1 in each application scene at the load level. To reduce the power consumption of the terminal device, an initial value of PL1 of each application is usually relatively small. However, some applications may lag when running with relatively small initial values of PL1. When an application lags, the terminal device may increase a PL1 value in the application scene in a preset time period based on an indication of the Computer Manager application, so that the application runs in a high-performance state, to reduce application lag. After the preset time period ends, PL1 in the application scene may be restored to an initial value of PL1 in the application scene.

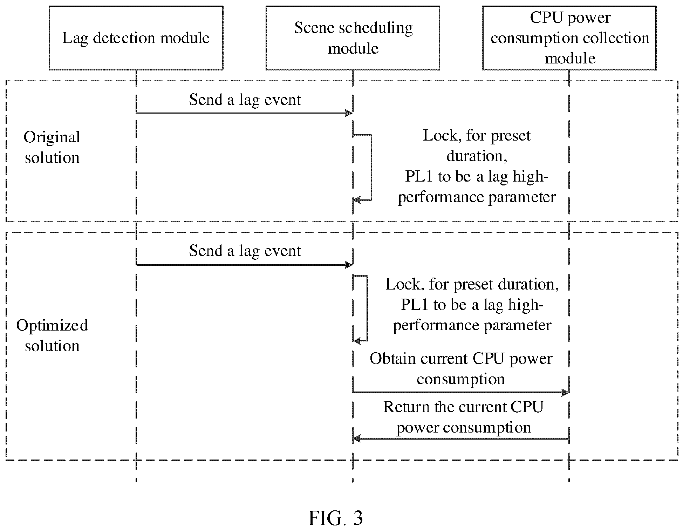

As shown in an original solution in FIG. 3, when a lag detection module in the Computer Manager application detects that a Windows foreground application lags, the lag detection module may send a lag event message to a scene scheduling module. The scene scheduling module may increase PL1 in the application scene to a relatively large value in a preset time period, so that the application runs in a high-performance state. After the preset time period ends, PL1 in the application scene is restored to an initial value of PL1 in the application scene.

However, in the foregoing implementation, because the relatively large value of PL1 in the application scene is restored to the initial value of PL1 in the application scene after the preset time period, the application may still frequently lag during subsequent running.

In view of this, the embodiments of this application provide a power consumption control method. As shown in an optimized solution in FIG. 3, when the lag detection module detects that a Windows foreground application lags, the scene scheduling module may increase PL1 in the application scene to a relatively large value in a preset time period, and in the preset time period, the scene scheduling module may perform power consumption sampling on a CPU through a CPU power consumption collection module, to obtain an actual CPU power consumption value, and calculate a CPU power consumption adaptation value in the preset time period based on the CPU power consumption value obtained through sampling. The CPU power consumption adaptation value may include, for example, an average CPU power consumption value or some values around an average CPU power consumption value. Further, the scene scheduling module may set PL1 in the application scene to the CPU power consumption adaptation value, so that a user performs an operation more smoothly in the application scene, to reduce a lag phenomenon, optimize system performance, and improve user experience.

In the embodiments of this application, the Computer Manager application may set different initial values of PL1 for different application scenes. The application scene may include a plurality of scenes such as an office scene, a browser scene, a video playing scene, a conference scene, a game scene, and a social scene.

An application in the terminal device may be pre-assigned to a corresponding application scene. For example, the office scene may include a scene in which an office document application is used, a scene in which a power point (power point, PPT) application is used, or a scene in which an excel sheet application is used. The browser scene may include a scene in which various browser applications are used. When identifying an application scene, the terminal device may determine, based on an identifier and the like of an application running in the foreground of the terminal device, an application scene to which the application belongs.

The power consumption control method in the embodiments of this application is described below in detail with reference to two different application scenes. For example, a scene 1 may be an office scene, and a scene 2 may be a browser scene.

Scene 1: Office scene

When a user opens an office application, a scene scheduling module in a Computer Manager application may obtain a current load status of a terminal device, and may determine a load level based on the load status. For a specific manner of determining the load level, refer to the foregoing related descriptions of the load level. Details are not described again. In addition, the scene scheduling module may obtain an initial value of PL1 in a corresponding office scene based on different load levels.

For example, when the terminal device has light load, an initial value of PL1 in the office scene may be 9W; when the terminal device has medium load, an initial value of PL1 in the office scene may be 15W; or when the terminal device has heavy load, an initial value of PL1 in the office scene may be 35W. The initial value of PL1 in the office scene may be set by the Computer Manager application based on an empirical preset value obtained through data analysis, and 9W, 15W, and 35W may be replaced with any possible value, provided that the initial value of PL1 in the case of light load is less than the initial value of PL1 in the case of medium load, and the initial value of PL1 in the case of medium load is less than the initial value of PL1 in the case of heavy load. An initial value of PL1 in each load case is not specifically limited in this embodiment of this application.

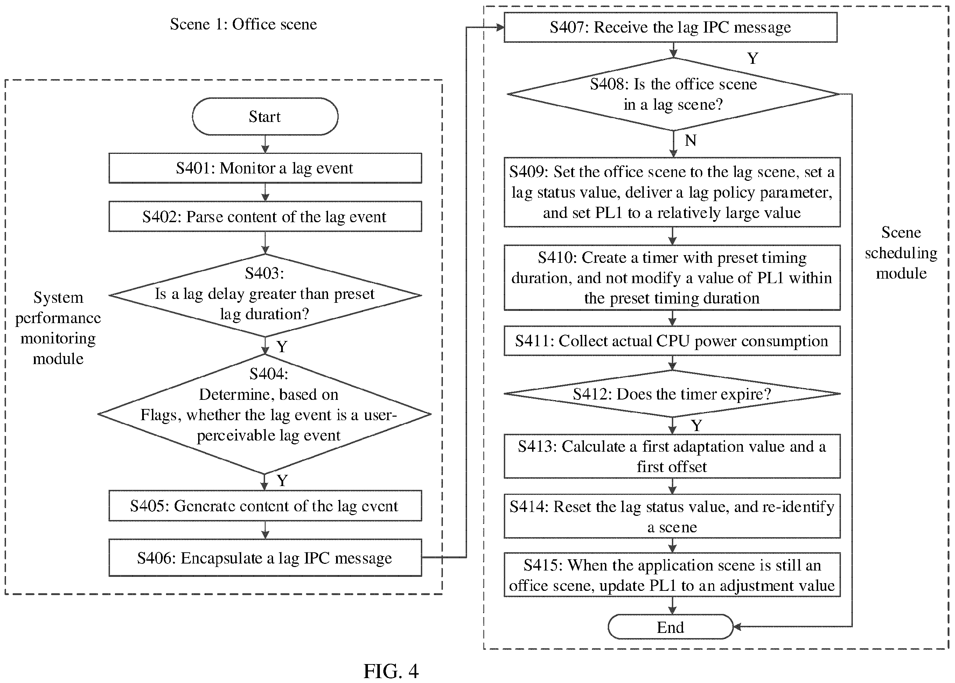

A case in which the terminal device has light load is used as an example. It is assumed that the initial value of PL1 in the office scene is 9W. FIG. 4 is a schematic diagram of a power consumption control method in the office scene.

S401: Monitor a lag event.

In a running process, a Windows foreground office application may lag and may frequently lag. In this case, a lag detection module in the Computer Manager application may obtain a lag event reported by the office application to the terminal device. In a possible implementation, the lag detection module may receive the lag event through event tracing for Windows windows (event tracing for Windows, ETW) for subscribing to a delay from the terminal device. The lag event monitored by the lag detection module may include a 35/37/38/173 event in a Windows system.

S402: Parse content of the lag event.

After detecting the lag event, the lag detection module may report the lag event to a system performance monitoring module in the Computer Manager application. The system performance monitoring module may parse the content of the lag event, to obtain a lag delay and an event flag Flags used to filter whether the lag event is user-perceivable lag. The user-perceivable lag event may include an event such as a mouse delay, an input delay, or window unresponsiveness.

S403: Is the lag delay greater than preset lag duration?

The system performance monitoring module may obtain a lag event through filtering based on the lag delay. For example, the system performance monitoring module may determine an event whose lag delay is greater than the preset lag duration as an alternative lag event, and continue to perform step S404; and perform no processing on an event whose lag delay is less than or equal to the preset lag duration. The preset lag duration may be set based on an empirical preset value obtained through data analysis. For example, the preset lag duration may be 3 seconds. A specific value of the preset lag duration is not limited in this embodiment of this application.

S404: Determine, based on Flags, whether the lag event is a user-perceivable lag event.

In this embodiment of this application, if the system performance monitoring module determines that the lag delay of the lag event exceeds the preset lag duration (for example, 3 seconds), and the lag event is a foreground process or the lag event is a process with a user input operation, it may be considered that the lag event is user-perceivable lag.

In a possible implementation of determining the user-perceivable lag event, the system performance monitoring module may filter, based on the event flag Flags of the user-perceivable lag, whether the lag event is a user-perceivable lag event. For example, the system performance monitoring module may perform an AND (&) operation on a value of the event flag Flags of the user-perceivable lag event and 0xCE0, and determine, based on a result of the AND operation, whether the current lag event is user-perceivable lag. For example, if "Flags value & 0xCE0 > 0, and lag delay > preset lag duration (for example, 3 seconds)", it is considered that the lag event is user-perceivable lag. Herein, 0xCE0 may be an empirical value obtained based on a plurality of tests. A value of 0xCE0 is not limited in this embodiment of this application.

S405: Generate content of the lag event.

If the system performance monitoring module determines that the lag event is a user-perceivable lag event, the content of the lag event may be further generated.

S406: Encapsulate a lag IPC message.

The system performance monitoring module may encapsulate the generated content of the lag event into an IPC message. Further, the system performance monitoring module may report the lag IPC message to the scene scheduling module in the Computer Manager application.

S407: Receive the lag IPC message.

The scene scheduling module may receive the lag IPC message reported by the system performance monitoring module, and continue to perform step S408.

S408: Is the office scene in a lag scene?

After receiving the lag IPC message, the scene scheduling module may determine, based on a lag status value, whether the current office scene is in the lag scene. If the current office scene is in the lag scene, it indicates that the current office scene is in a PL1 high-performance state locked for the preset lag duration. In this case, the scene scheduling module does not process the lag IPC message. If the current office scene is not in the lag scene, the scene scheduling module may consider that the received lag IPC message needs to be processed, and perform step S409. The lag status value may be of a data type such as a Boolean type, an integer type, or a string. For example, when the office scene is in the lag scene, the lag status value may be set to true, or when the office scene is not in the lag scene, the lag status value may be set to false. A specific manner of setting the lag status value is not limited in this embodiment of this application.

S409: Set the office scene to the lag scene, set the lag status value, deliver a lag policy parameter, and set PL1 to a relatively large value.

When it is determined that the office scene is not in the lag scene, the scene scheduling module may set the current office scene to the lag scene, generate the policy parameter corresponding to the lag event, and set the lag status value, for example, may set the lag status value to true. The lag policy parameter may be a CPU power consumption parameter PL1. Because the policy parameter of the lag event is used to improve CPU performance, PL1 may be set to a relatively large value. For example, the relatively large value of PL1 may be 35W. It may be understood that PL1 may alternatively be a preset maximum value. The relatively large value of PL1 may be set based on an empirical preset value obtained through data analysis. A specific relatively large value of PL1 is not limited in this embodiment of this application.

Further, the scene scheduling module may send the relatively large value of PL1 corresponding to the lag event to an underlying chip, and the underlying chip may adjust PL1 from the initial value to the relatively large value. The relatively large value of PL1 is greater than the initial value of PL1. For example, in the office scene, the initial value of PL1 before adjustment may be 9W, and the relatively large value of PL1 after adjustment may be 35W. In this way, after a value of PL1 is increased, the CPU performance can be improved, to reduce a lag event.

S410: Create a timer with preset timing duration, and not modify the value of PL1 within the preset timing duration.

When sending the policy parameter corresponding to the lag event, the scene scheduling module may create and start the timer, and set duration of the timer to the preset timing duration. The preset timing duration may be set based on an empirical preset value obtained through data analysis. For example, the preset timing duration may be 5 minutes. A specific value of the preset timing duration is not limited in this embodiment of this application.

It may be understood that the scene scheduling module no longer delivers a new policy parameter within the preset timing duration, that is, the scene scheduling module no longer modifies the value of PL1 within the preset timing duration (for example, 5 minutes), so that PL1 is locked at the relatively large value and remains unchanged. In this way, PL1 can be maintained at a high-performance parameter value and is not adjusted, so that the office application can run smoothly for a period of time, to reduce impact of lag.

S411: Collect actual CPU power consumption.

Within the preset timing duration (for example, 5 minutes), PL1 is in a lag high-performance parameter state. In addition, the scene scheduling module may obtain the actual CPU power consumption from a CPU power consumption collection module, to implement sampling of a CPU power consumption value within the preset timing duration.

To balance feasibility of the solution and overall system power consumption, in this embodiment of this application, after a plurality of sampling periods (for example, the sampling period is set to 1 second, 3 seconds, 5 seconds, or 10 seconds) are compared, 5 seconds is selected as a sampling period for calculating average CPU power consumption in this embodiment of this application. A specific sampling period is not limited in this embodiment of this application.

S412: Does the timer expire?

If the timer does not expire, step S411 continues to be performed to sample the CPU power consumption. If the timer expires, sampling of the CPU power consumption is ended, and step S413 is performed.

S413: Calculate a first adaptation value and a first offset.

After the timer expires, that is, after the preset timing duration (for example, 5 minutes), the scene scheduling module may calculate the first adaptation value of the CPU power consumption in the office scene. The first adaptation value may include, for example, an average CPU power consumption value $AverageCPUPower_1$ or some values around an average CPU power consumption value. Further, the scene scheduling module may perform calculation by using the first adaptation value and the initial value of PL1 in the office scene, to obtain the first offset $OFFSET_{light\ 1}$ corresponding to the office scene in the case of light load.

For example, in the case of light load, the first offset $OFFSET_{light\ 1}$ may be a difference between the average CPU power consumption value $AverageCPUPower_1$ and the initial value $PL1_1$ of PL1, and the first offset $OFFSET_{light\ 1}$ may meet the following formula:

$$OFFSET1_{light\ 1} = AverageCPUPower1_1 - PL1_1$$

It may be understood that the first offset $OFFSET_{light\ 1}$ may alternatively be a value obtained after preprocessing, including: performing a multiplication operation on the first adaptation value and then performing a difference operation with the initial value of PL1, performing a multiplication operation on a difference between the first adaptation value and the initial value of PL1, or the like. A specific manner of calculating the first offset is not limited in this embodiment of this application. A value of the first offset may be stored in an array or another data structure. For example, the value of the first offset is stored in an array. In this case, the array may be used to store an offset corresponding to each application scene, and there may be a one-to-one relationship between the application scene and the offset. For example, if the office scene may be represented by using a field SCENE_TYPE_WORKING, and the offset corresponding to the office scene is 8W, the offset corresponding to the office scene may be represented as {SCENE_TYPE_WORKING, 8} in the array.

It should be noted that when the scene scheduling module calculates the first offset, a case in which data is not ideal may occur. For example, the scene scheduling module may consider that the first offset is a valid value if the first offset falls within an interval (0, 10). The first offset is set to be greater than 0, so that the initial value of PL1 is not set to be smaller by using the first offset. In this way, the application may not be prone to lag. The first offset is set not to exceed 10, to reduce a scene, for example, high load, in which the CPU power consumption is abnormal.

S414: Reset the lag status value, and re-identify an application scene.

After the timer expires, the scene scheduling module may reset the lag status value, for example, set the lag status value to false, and re-identify the application scene. The application scene may be identified by using a scene identification module in the Computer Manager application. For a specific identification manner, refer to the foregoing descriptions in the implementation of application scene identification. Details are not described again.

When the application scene is re-identified as an office scene, step S415 is performed.

S415: When the application scene is still an office scene, update PL1 to an adjustment value.

When it is identified that the application scene is still an office scene, if the terminal device has light load, the scene scheduling module may deliver the calculated first adaptation value to the underlying chip as the adjustment value of PL1, and the underlying chip may modify PL1 from the relatively large value to the adjustment value. The adjustment value of PL1 is less than the relatively large value of PL1, and the adjustment value of PL1 is greater than the initial value of PL1. For example, in the office scene, the initial value of PL1 may be 9W, the relatively large value of PL1 may be 35W, and the adjustment value of PL1 may be 17W. In this way, in a state in which PL1 is not very small, the CPU power consumption of the terminal device can be reduced, to reduce a lag event and improve the CPU performance.

In this embodiment of this application, in the case of light load, the adjustment value of PL1 may be a sum of the initial value of PL1 and the first offset. It may be understood that when the first offset is calculated, if specific processing is performed on a calculation process of the difference, corresponding reverse processing may be performed when the adjustment value of PL1 is calculated. A specific process of calculating the adjustment value of PL1 is not described in this embodiment of this application.

It may be understood that in a same application scene, different load levels may correspond to different offsets. For example, in the office scene, if a load level identified in step S415 is medium load, the adjustment value of PL1 may be a sum of the initial value of PL1 corresponding to the medium load and an offset $OFFSET1_{medium\ 1}$ corresponding to the medium load. That is, the adjustment value of PL1 in the case of medium load cannot be calculated by using the offset $OFFSET1_{light\ 1}$ corresponding to the light load. If no offset is calculated in the medium-load office scene, it may be considered that a value of the offset $OFFSET1_{medium\ 1}$ corresponding to the medium load is 0. In this case, in the case of medium load, the adjustment value of PL1 may be the initial value of PL1.

In the office scene, if a load level identified in step S415 is heavy load, it may be considered that in the case of heavy load, the CPU power consumption of the terminal device is relatively high, and PL1 in the case of heavy load may not be adjusted.

In a possible implementation, if the user exits the office application, when the user opens the office application again, the Computer Manager application may re-identify the application scene. When the application scene is re-identified as an office scene, step S415 may be performed to update PL1 to the adjustment value.

In a possible implementation, if lag subsequently occurs again in the office scene, the Computer Manager application may recalculate an offset in the office scene, and store the offset in the array. It may be understood that if a value of the offset is already stored in the array, a value of the recalculated offset may overwrite the previous value. For example, when the load level is light load, a recalculated offset $OFFSET1_{light\ 1}$ may overwrite the previously existing value of the offset $OFFSET1_{light\ 1}$ corresponding to the light load. When the load level is medium load, a recalculated offset $OFFSET1_{medium\ 1}$ may overwrite the previously existing value of the offset $OFFSET1_{medium\ 1}$ corresponding to the medium load.

After the terminal device re-identifies the application scene as an office scene, PL1 may be updated to the adjustment value based on a sum of the initial value of PL1 and an offset at a corresponding load level. When the adjustment value of PL1 is calculated, the initial value corresponding to PL1 may remain unchanged. For example, the initial value of PL1 in the case of light load may be maintained at preset 9W, and the initial value of PL1 in the case of medium load may be maintained at preset 15W. An offset corresponding to PL1 may be a value from the array, that is, the offset corresponding to PL1 is a value calculated and stored last time. The adjustment value of PL1 that is recalculated by using the power consumption control method in this embodiment of this application increases the value of PL1 relative to the initial value of PL1, thereby reducing a possibility of frequent lag in the office scene.

Scene 2: Browser scene

When a user opens a browser application, a scene scheduling module in a Computer Manager application may obtain a current load status of a terminal device, and may determine a load level based on the load status. For a specific manner of determining the load level, refer to the foregoing related descriptions of the load level. Details are not described again. In addition, the scene scheduling module may obtain an initial value of PL1 in a corresponding browser scene based on different load levels.

For example, when the terminal device has light load, an initial value of PL1 in the browser scene may be 12W; when the terminal device has medium load, an initial value of PL1 in the browser scene may be 21W; or when the terminal device has heavy load, an initial value of PL1 in the browser scene may be 45W. The initial value of PL1 in the browser scene may be set by the Computer Manager application based on an empirical preset value obtained through data analysis, and 12W, 21W, and 45W may be replaced with any possible value, provided that the initial value of PL1 in the case of light load is less than the initial value of PL1 in the case of medium load, and the initial value of PL1 in the case of medium load is less than the initial value of PL1 in the case of heavy load. An initial value of PL1 in each load case is not specifically limited in this embodiment of this application.

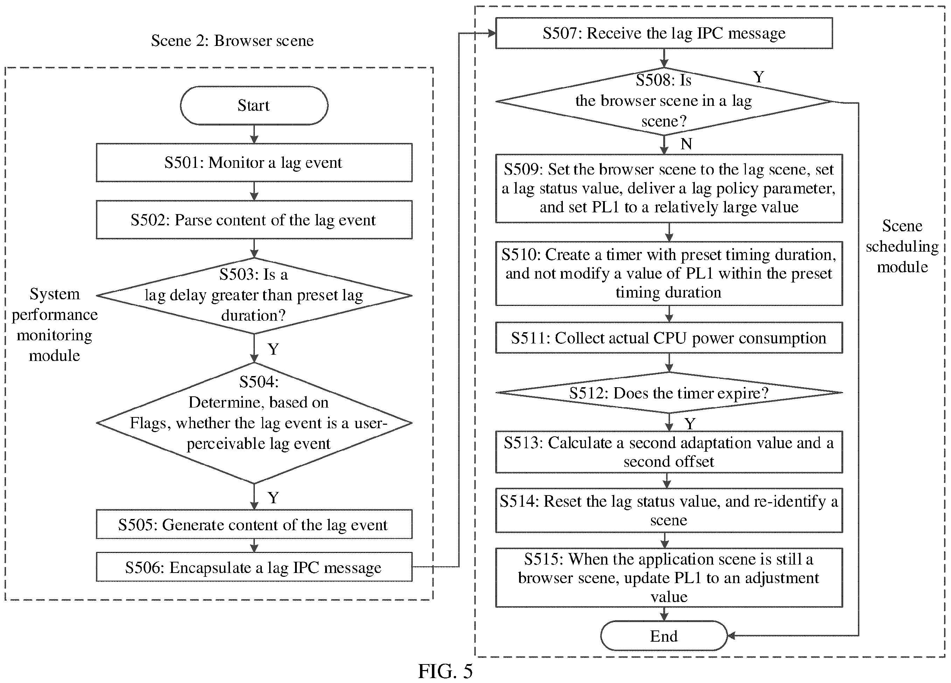

A case in which the terminal device has light load is used as an example. It is assumed that the initial value of PL1 in the browser scene is 12W. FIG. 5 is a schematic diagram of a power consumption control method in the browser scene.

S501: Monitor a lag event.

In a running process, a Windows foreground browser application may lag and may frequently lag. In this case, a lag detection module in the Computer Manager application may obtain a lag event reported by the browser application to the terminal device. Specifically, for an implementation of detecting the lag event by the lag detection module, refer to the related descriptions in corresponding S401 in FIG. 4. Details are not described again.

S502: Parse content of the lag event.

In this embodiment of this application, for an implementation of parsing the content of the lag event, refer to the related descriptions in corresponding S402 in FIG. 4. Details are not described again.

S503: Is a lag delay greater than preset lag duration?

In this embodiment of this application, for determining whether the lag delay is greater than the preset lag duration, refer to the related descriptions in corresponding S403 in FIG. 4. Details are not described again. It may be understood that the preset lag duration corresponding to the browser scene may be the same as or different from the preset lag duration corresponding to the foregoing office scene. For example, the preset lag duration may be 4 seconds. A specific value of the preset lag duration is not limited in this embodiment of this application.

S504: Determine, based on Flags, whether the lag event is a user-perceivable lag event.

In this embodiment of this application, for an implementation of determining whether the lag event is a user-perceivable lag event, refer to the related descriptions in corresponding S404 in FIG. 4. Details are not described again.

S505: Generate content of the lag event.

If a system performance monitoring module determines that the lag event is a user-perceivable lag event, the content of the lag event may be further generated.

S506: Encapsulate a lag IPC message.

The system performance monitoring module may encapsulate the generated content of the lag event into an IPC message. Further, the system performance monitoring module may report the lag IPC message to the scene scheduling module in the Computer Manager application.

S507: Receive the lag IPC message.

The scene scheduling module may receive the lag IPC message reported by the system performance monitoring module, and continue to perform step S508.

S508: Is the browser scene in a lag scene?

In this embodiment of this application, for a method for determining whether the browser scene is in the lag scene, refer to the related descriptions in corresponding S408 in FIG. 4. Details are not described again. If the current browser scene is in the lag scene, no processing is performed. If the current browser scene is not in the lag scene, step S509 is performed.

S509: Set the browser scene to the lag scene, set a lag status value, deliver a lag policy parameter, and set PL1 to a relatively large value.

In this embodiment of this application, for step S509, refer to the related descriptions in corresponding S409 in FIG. 4. Details are not described again. For example, in the browser scene, the initial value of PL1 before adjustment may be 12W, and the relatively large value of PL1 after adjustment may be 45W. In this way, after a value of PL1 is increased, CPU performance can be improved, to reduce a lag event.

S510: Create a timer with preset timing duration, and not modify the value of PL1 within the preset timing duration.

In this embodiment of this application, for step S510, refer to the related descriptions in corresponding S410 in FIG. 4. Details are not described again. It may be understood that the preset timing duration corresponding to the browser scene may be the same as or different from the preset timing duration corresponding to the foregoing office scene. For example, the preset timing duration may be 3 minutes. A specific value of the preset timing duration is not limited in this embodiment of this application.

S511: Collect actual CPU power consumption.

In this embodiment of this application, for step S511, refer to the related descriptions in corresponding S411 in FIG. 4. Details are not described again. It may be understood that a sampling period corresponding to the browser scene may be the same as or different from the sampling period corresponding to the foregoing office scene. A sampling period corresponding to a specific browser scene is not limited in this embodiment of this application.

S512: Does the timer expire?

If the timer does not expire, step S511 continues to be performed to sample the CPU power consumption. If the timer expires, sampling of the CPU power consumption is ended, and step S513 is performed.

S513: Calculate a second adaptation value and a second offset.

After the timer expires, that is, after the preset timing duration (for example, 3 minutes), the scene scheduling module may calculate the second adaptation value of the CPU power consumption in the browser scene. For a method for calculating the second adaptation value and the second offset $OFFSET1_{light\,2}$ in the case of light load, refer to the related descriptions in corresponding S413 in FIG. 4. Details are not described again.

For example, in the case of light load, the second offset $OFFSET_{light\,2}$ may be a difference between an average CPU power consumption value $AverageCPUPower_2$ and the initial value $PL1_2$ of PL1, and the second offset $OFFSET_{light\,2}$ may meet the following formula:

$$OFFSET1_{light\,2} = AverageCPUPower1_2 - PL1_2$$

In this embodiment of this application, for a calculation method, a storage method, and a value range of the offset, refer to the related descriptions in corresponding S413 in FIG. 4. Details are not described again.

S514: Reset the lag status value, and re-identify an application scene.

In this embodiment of this application, for step S514, refer to the related descriptions in corresponding S414 in FIG. 4. Details are not described again. When the application scene is re-identified as a browser scene, step S515 is performed.

S515: When the application scene is still a browser scene, update PL1 to an adjustment value.

When it is identified that the application scene is still a browser scene, if the terminal device has light load, the scene scheduling module may deliver the calculated second adaptation value to an underlying chip as the adjustment value of PL1, and the underlying chip may modify PL1 from the relatively large value to the adjustment value. The adjustment value of PL1 is less than the relatively large value of PL1, and the adjustment value of PL1 is greater than the initial value of PL1.

In this embodiment of this application, for a method for calculating the adjustment value of PL1, refer to the related descriptions in corresponding S415 in FIG. 4. Details are not described again. It may be understood that in a same application scene, different load levels may correspond to different offsets. For example, in the browser scene, if a load level identified in step S515 is medium load, the adjustment value of PL1 may be a sum of the initial value of PL1 corresponding to the medium load and an offset $OFFSET1_{medium\,2}$ corresponding to the medium load. That is, the adjustment value of PL1 in the case of medium load cannot be calculated by using the offset $OFFSET1_{light\,2}$ corresponding to the light load. If no offset is calculated in the medium-load browser scene, it may be considered that a value of the offset $OFFSET1_{medium\,2}$ corresponding to the medium load is 0. In this case, in the case of medium load, the adjustment value of PL1 may be the initial value of PL1.

In the browser scene, if a load level identified in step S515 is heavy load, it may be considered that in the case of heavy load, the CPU power consumption of the terminal device is relatively high, and PL1 in the case of heavy load may not be adjusted.

In a possible implementation, if the user exits the browser application, when the user opens the browser application again, the Computer Manager application may re-identify the application scene. If the application scene is re-identified as a browser scene, step S515 may be performed to update PL1 to the adjustment value. If the identified application scene is another application scene, the power consumption control method in this embodiment of this application may be performed again. It may be understood that an execution process of the power consumption control method in another application scene is similar to that in the office scene or the browser scene. Details are not described again. A difference is that different scenes correspond to different values of data such as PL1 and offsets. For example, initial values of PL1, relatively large values of PL1, adjustment values of PL1, and offsets in different scenes may be the same or different. This is not limited in this embodiment of this application.

In a possible implementation, if lag subsequently occurs again in the browser scene, the Computer Manager application may recalculate an offset in the browser scene. For a specific manner of calculating the offset, refer to the related descriptions in corresponding S415 in FIG. 4. Details are not described again.

It should be understood that when the Computer Manager application runs, the power consumption control method in this embodiment of this application may be performed. When the Computer Manager application is exited, the power consumption control method provided in this embodiment of this application is no longer performed, and a corresponding relationship between each application scene and an offset OFFSET is released in a memory, that is, a value of the offset OFFSET may be reset. When the Computer Manager application is started next time, parameters such as the value of the offset OFFSET corresponding to each application scene need to be recalculated.

The power consumption control method in the embodiments of this application is described below in detail by using specific embodiments. The following embodiments may be combined with each other or separately implemented, and same or similar concepts or processes may not be described in some embodiments.

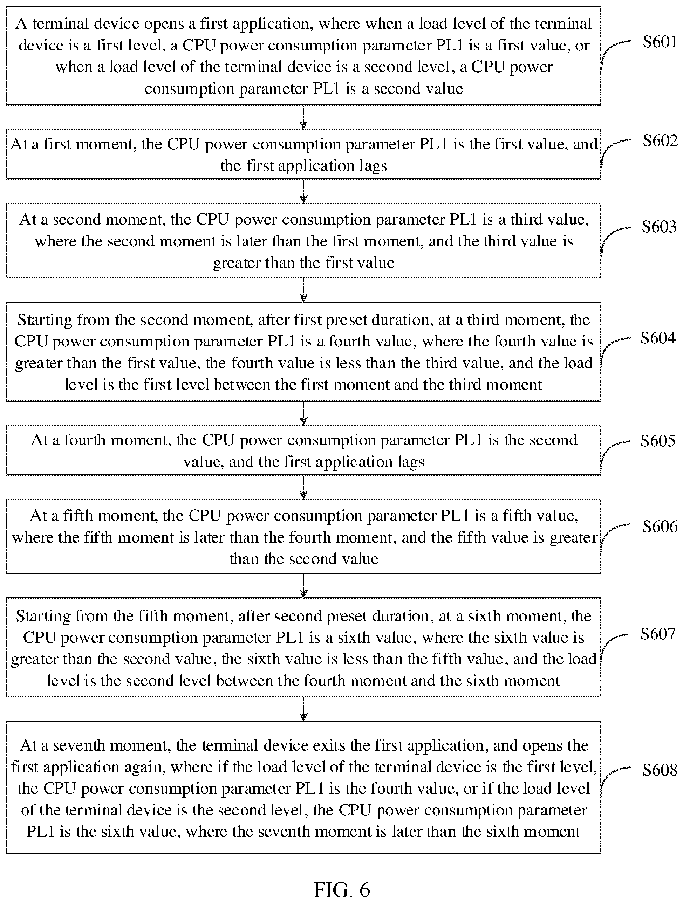

FIG. 6 shows a power consumption control method according to an embodiment of this application. The method includes the following steps.

S601: A terminal device opens a first application, where when a load level of the terminal device is a first level, a CPU power consumption parameter PL1 is a first value, or when a load level of the terminal device is a second level, a CPU power consumption parameter PL1 is a second value. In this embodiment of this application, the first application may be an application opened by a user. For example, the first application may be the office application or the browser application in the foregoing embodiment. A type of the application is not limited in this embodiment of this application.

It may be understood that in a same application scene, different load levels correspond to different initial values of the CPU power consumption parameter PL1. For a specific correspondence between the load level and the initial value of PL1, refer to the related descriptions in the embodiment corresponding to FIG. 4 or FIG. 5. Details are not described again.

For example, the first value may be the initial value (9W) of PL1 corresponding to the light load in the office scene in the embodiment corresponding to FIG. 4, or may be the initial value (12W) of PL1 corresponding to the light load in the browser scene in the embodiment corresponding to FIG. 5; and the second value may be the initial value (15W) of PL1 corresponding to the medium load in the office scene in the embodiment corresponding to FIG. 4, or may be the initial value (20W) of PL1 corresponding to the medium load in the browser scene in the embodiment corresponding to FIG. 5. The first value and the second value may be set by a Computer Manager application based on an empirical preset value obtained through data analysis, provided that the first value is less than the second value. The first value and the second value are not specifically limited in this embodiment of this application.

S602: At a first moment, the CPU power consumption parameter PL1 is the first value, and the first application lags.

In this embodiment of this application, the first moment may be a moment at which PL1 of the first application is an initial value at the first load level. At the first moment, PL1 set by the terminal device for the first application is the first value, and the first value is relatively small.

For detection of the lag event, refer to the related descriptions in corresponding S401 in FIG. 4. Details are not described again.

S603: At a second moment, the CPU power consumption parameter PL1 is a third value, where the second moment is later than the first moment, and the third value is greater than the first value. In this embodiment of this application, the second moment may be a moment at which PL1 of the first application is a relatively large value at the first load level. The third value may be the relatively large value of PL1 set by the terminal device for the first application. For example, the third value may be the relatively large value (35W) of PL1 set by the terminal device for the office application in the office scene in the embodiment corresponding to FIG. 4, or the third value may be the relatively large value (45W) of PL1 set by the terminal device for the browser application in the browser scene in the embodiment corresponding to FIG. 5. For a specific process of setting PL1 to the relatively large value, refer to the related descriptions in corresponding S409 in FIG. 4. Details are not described again.

S604: Starting from the second moment, after first preset duration, at a third moment, the CPU power consumption parameter PL1 is a fourth value, where the fourth value is greater than the first value, the fourth value is less than the third value, and the load level is the first level between the first moment and the third moment.

In this embodiment of this application, the third moment may be a moment at which PL1 of the first application is an adjustment value at the first load level. The first level may be a light load level, a medium load level, or the like. A specific load level corresponding to the first level is not limited in this embodiment of this application.

The fourth value may be the adjustment value of PL1 set by the terminal device for the first application, and the fourth value may be the adjustment value (17W) of PL1 set by the terminal device for the office application in the office scene in the embodiment corresponding to FIG. 4. For a specific process of calculating the adjustment value of PL1, refer to the related descriptions in corresponding S413 in FIG. 4. Details are not described again.

S605: At a fourth moment, the CPU power consumption parameter PL1 is the second value, and the first application lags.

In this embodiment of this application, the fourth moment may be a moment at which PL1 of the first application is an initial value at the second load level. At the fourth moment, PL1 set by the terminal device for the first application is the second value, and the second value is relatively small. For detection of the lag event, refer to the related descriptions in corresponding S401 in FIG. 4.

Details are not described again.

S606: At a fifth moment, the CPU power consumption parameter PL1 is a fifth value, where the fifth moment is later than the fourth moment, and the fifth value is greater than the second value. In this embodiment of this application, the fifth moment may be a moment at which PL1 of the first application is a relatively large value at the second load level. The fifth value may be the relatively large value of PL1 set by the terminal device for the first application. For example, for setting of the fifth value, refer to the related descriptions of setting the third value in step S603. It may be understood that the fifth value and the third value may be the same or different. For a specific process of setting the fifth value, refer to the related descriptions in corresponding S409 in FIG. 4. Details are not described again.

S607: Starting from the fifth moment, after second preset duration, at a sixth moment, the CPU power consumption parameter PL1 is a sixth value, where the sixth value is greater than the second value, the sixth value is less than the fifth value, and the load level is the second level between the fourth moment and the sixth moment.

In this embodiment of this application, the sixth moment may be a moment at which PL1 of the first application is an adjustment value at the second load level. The sixth value may be the adjustment value of PL1 set by the terminal device for the first application. For a specific process of calculating the adjustment value of PL1, refer to the related descriptions in corresponding S413 in FIG. 4. Details are not described again.

The second level may be a light load level, a medium load level, or the like. It may be understood that the second level may be different from the first level. A specific load level corresponding to the second level is not limited in this embodiment of this application.

S608: At a seventh moment, the terminal device exits the first application, and opens the first application again, where if the load level of the terminal device is the first level, the CPU power consumption parameter PL1 is the fourth value, or if the load level of the terminal device is the second level, the CPU power consumption parameter PL1 is the sixth value, where the seventh moment is later than the sixth moment.

In this embodiment of this application, the seventh moment may be a moment at which the terminal device exits the first application, and opens the first application again. For a method for calculating the fourth value and the sixth value, refer to the related descriptions in corresponding S415 in FIG. 4. Details are not described again. The application may adapt to a more suitable CPU power consumption parameter PL1 during lag, so that a user performs an operation more smoothly in the application scene, to reduce a lag phenomenon, optimize system performance, and improve user experience.

Optionally, based on the embodiment corresponding to FIG. 6, the method may include: collecting CPU power consumption between the second moment and the third moment based on a first sampling period, to obtain N CPU power consumption values; determining a first CPU power consumption adaptation value based on the N CPU power consumption values; obtaining a first offset, where the first offset is a difference between the first CPU power consumption adaptation value and the first value, and after the third moment, exiting, by the terminal device, the first application, and opening the first application again, wherein if the load level of the terminal device is the first level, the CPU power consumption parameter PL1 is the fourth value obtained by adding the first value and the first offset.

In this embodiment of this application, for the first sampling period, refer to the related descriptions in corresponding S411 in FIG. 4. Details are not described again. For example, if the sampling period is 5s and preset timing duration is 5 minutes, 60 CPU power consumption values may be collected, that is, N may be 60.

The first CPU power consumption adaptation value may include, for example, an average CPU power consumption value or some values around an average CPU power consumption value. For example, the first CPU power consumption adaptation value may be the average CPU power consumption value $AverageCPUPower_1$ in the office scene corresponding to FIG. 4, or the first CPU power consumption adaptation value may be the average CPU power consumption value $AverageCPUPower_2$ in the browser scene corresponding to FIG. 5.

For a manner of calculating the first offset, refer to the related descriptions in corresponding S413 in FIG. 4. Details are not described again. For example, the first offset may be the first offset $OFFSET_{light\ 1}$ in the foregoing office scene, or the first offset may be the second offset $OFFSET_{light\ 2}$ in the foregoing browser scene.

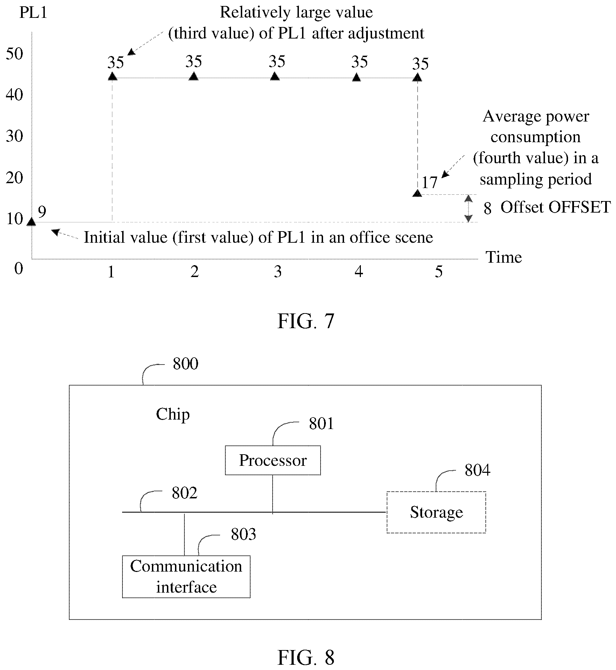

For example, as shown in FIG. 7, the office scene in the embodiment corresponding to FIG. 4 is used as an example. If the first level is light load, the initial value (first value) of PL1 in the office scene may be 9W. After the office application lags, PL1 is adjusted to the relatively large value. For example, the relatively large value, that is, the third value, of PL1 may be 35W. The fourth value of PL1 may be the average CPU power consumption value in the sampling period. For example, the fourth value may be 17W. Herein, the first value (9W) is less than the fourth value (17W) that is less than the third value (35W).

Further, it may be calculated that the first offset may be 8W. Because the fourth value of PL1 may alternatively be a sum of the first value (9W) of PL1 and the first offset (8W), it may also be calculated that the fourth value may be 17W. It may be understood that if the calculated fourth value of PL1 is greater than or equal to the third value of PL1, the fourth value of PL1 is discarded, and the first value of PL1 is still used.

The terminal device may obtain, by sampling actual CPU power consumption, different CPU power consumption adaptation values corresponding to different applications when the load level is the first level. In a process of running the application, a value of the CPU power consumption parameter PL1 is increased, so that each application can have a more suitable CPU power consumption limit, to reduce application lag and improve user experience.

Optionally, based on the embodiment corresponding to FIG. 6, the method may include: collecting CPU power consumption between the fifth moment and the sixth moment based on a second sampling period, to obtain M CPU power consumption values; determining a second CPU power consumption adaptation value based on the M CPU power consumption values; obtaining a second offset, where the second offset is a difference between the second CPU power consumption adaptation value and the second value, and where after the sixth moment, exiting, by the terminal device, the first application, and opening the first application again, wherein if the load level of the terminal device is the second level, the CPU power consumption parameter PL1 is the sixth value obtained by adding the second value and the second offset.

In this embodiment of this application, for the second sampling period, refer to the related descriptions in corresponding S411 in FIG. 4. Details are not described again. The second sampling period and the first sampling period may be the same or different. That is, values of M and N may be the same or different. The second CPU power consumption adaptation value may be an average CPU power consumption value or some values around an average CPU power consumption value obtained when the load level is the second level. This is not limited in this embodiment of this application.

The second offset may be an offset calculated when the load level is the second level. For a manner of calculating the second offset, refer to the related descriptions in corresponding S413 in FIG. 4. Details are not described again.

The terminal device may obtain, by sampling actual CPU power consumption, different CPU power consumption adaptation values corresponding to different applications when the load level is the second level, so that each application can have a more suitable CPU power consumption limit, to reduce application lag and improve user experience.

Optionally, based on the embodiment corresponding to FIG. 6, the CPU power consumption parameter PL1 value of the first application is controlled by a second application, the first offset and the second offset are managed by the second application, and the method may further include: resetting both the first offset and the second offset when the second application is exited.

In this embodiment of this application, the second application may be some management applications in the terminal device. The management application may include, for example, a Computer Manager application, a security management application, or the like. For example, the second application may be the Computer Manager application in the foregoing embodiment. When the second application runs, the power consumption control method in this embodiment of this application may be performed. The second application may control or manage the first value, the second value, and the relatively large value of the PL1 value, a CPU power consumption configuration value, an offset, and the like.

When the second application is exited, the power consumption control method provided in this embodiment of this application is no longer performed, and a corresponding relationship between each application scene and an offset is released in a memory, that is, a value of the offset may be reset. When the second application is started next time, parameters such as the value of the offset corresponding to each application scene need to be recalculated.

The power consumption control method in this embodiment of this application may be performed in a plurality of management applications in the terminal device. The method has a relatively wide application range, and is generally applicable, making it more convenient to control and manage CPU power consumption of each application in the terminal device, thereby improving performance of the terminal device.

Optionally, based on the embodiment corresponding to FIG. 6, the method includes: At an eighth moment, the terminal device exits the second application, and opens the second application again, where the eighth moment is later than the seventh moment; and at a ninth moment, the terminal device opens the first application, where when the load level of the terminal device is the first level, the CPU power consumption parameter PL1 is the first value, or when the load level of the terminal device is the second level, the CPU power consumption parameter PL1 is the second value; and the ninth moment is later than the eighth moment.

In this embodiment of this application, after the second application is exited, the relationship between each application scene and the corresponding offset is released in the memory. For example, values such as the offset $OFFSET1_{light\ 1}$ and $OFFSET1_{medium\ 1}$ in the foregoing office scene and the offset $OFFSET1_{light\ 2}$ and $OFFSET1_{medium\ 2}$ in the browser scene are reset. When the second application is opened again, the offset is 0. Therefore, for the first application, when the load level is the first level, the initial value of PL1 is the first value; or when the load level is the second level, the initial value of PL1 is the second value.

An initial preset value of PL1 is restored, so that a CPU power consumption value corresponding to each application is not always a relatively large value, to reduce power consumption of the terminal device and improve performance of the terminal device.

Optionally, based on the embodiment corresponding to FIG. 6, the method may include: The second application may include a system performance monitoring module, a scene scheduling module, and a CPU power consumption collection module; between the first moment and the second moment, the system performance monitoring module determines that the lag event is a user-perceivable lag event; at the second moment, the scene scheduling module sets the CPU power consumption parameter PL1 to the third value; starting from the second moment, within the first preset duration, the scene scheduling module performs power consumption sampling on a CPU through the CPU power consumption collection module; at the third moment, the scene scheduling module sets the CPU power consumption parameter PL1 to the fourth value; between the fourth moment and the fifth moment, the system performance monitoring

EP 4 546 141 A1

module determines that the lag event is a user-perceivable lag event; at the fifth moment, the scene scheduling module sets the CPU power consumption parameter PL1 to the fifth value; starting from the fifth moment, within the second preset duration, the scene scheduling module performs power consumption sampling on the CPU through the CPU power consumption collection module; at the sixth moment, the scene scheduling module sets the CPU power consumption parameter PL1 to the sixth value; and at the seventh moment, the terminal device exits the first application, and opens the first application again, and if the load level of the terminal device is the first level, the scene scheduling module sets the CPU power consumption parameter PL1 to the fourth value, or if the load level of the terminal device is the second level, the scene scheduling module sets the CPU power consumption parameter PL1 to the sixth value.

In this embodiment of this application, the system performance monitoring module in the second application may obtain a lag event in a system of the terminal device, and report the lag event to the scene scheduling module. The scene scheduling module may identify an application scene in which the terminal device is located, may further obtain a load status of the terminal device, and determine, with reference to the load status of the terminal device, the CPU power consumption parameter PL1 that conforms to actual running of the terminal device. The CPU power consumption collection module may obtain a CPU power consumption value, and report the CPU power consumption value to the scene scheduling module.

The second application sets adaptive CPU power consumption values for different application scenes through mutual coordination of different modules, so that the application runs more smoothly, to reduce a lag phenomenon, optimize system performance, and improve user experience.

Optionally, based on the embodiment corresponding to FIG. 6, that the system performance monitoring module determines that the lag event is a user-perceivable lag event may include: When a delay of the lag event exceeds third preset duration, the system performance monitoring module determines, based on an event flag Flags, that the lag event is a user-perceivable lag event.

In the foregoing manner, the user-perceivable lag event (for example, a mouse delay, an input delay, or window unresponsiveness) may be accurately identified, and when the user-perceivable lag event occurs, the CPU power consumption parameter PL1 may be adjusted, to reduce application lag.

Optionally, based on the embodiment corresponding to FIG. 6, a lag type of the lag may include one or more of the following: mouse delay lag, input delay lag, and window unresponsiveness lag. In this embodiment of this application, application power consumption control is performed for user-perceivable lag, to reduce a probability of application lag and improve user experience.

Optionally, based on the embodiment corresponding to FIG. 6, the method may include: When the load level of the terminal device remains unchanged, different application scenes correspond to different CPU power consumption parameters PL1.

Different applications correspond to different CPU power consumption parameters PL1, so that each application can have a more suitable CPU power consumption limit, to reduce application lag and improve user experience.

The solutions provided in the embodiments of this application are mainly described above from a method perspective. To implement the foregoing functions, corresponding hardware structures and/or software modules for performing the functions are included. A person skilled in the art should be easily aware that the example method steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each specific application, but it should not be considered that such an implementation goes beyond the scope of this application.

In the embodiments of this application, an apparatus for implementing the power consumption control method may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. It should be noted that division of the modules in the embodiments of this application is an example, and is merely logical function division. During actual implementation, there may be another division manner.

FIG. 8 is a schematic diagram of a structure of a chip according to an embodiment of this application. A chip 800 includes one or at least two (including two) processors 801, a communication line 802, a communication interface 803, and a storage 804.

In some implementations, the storage 804 stores the following elements: an executable module or a data structure, or a subset thereof, or an extended set thereof.

The method described in the embodiments of this application may be applied to the processor 801 or implemented by the processor 801. The processor 801 may be an integrated circuit chip having a capability of processing a signal. In an implementation process, the steps of the method may be completed by using an integrated logic circuit of hardware in the processor 801 or by using instructions in a form of software. The processor 801 may be a general-purpose processor (for example, a microprocessor or a conventional processor), a digital signal processor (digital signal

19

processing, DSP), an application specific integrated circuit (application specific integrated circuit, ASIC), a field-programmable gate array (field-programmable gate array, FPGA) or another programmable logic device, a discrete gate, a transistor logic device or a discrete hardware component. The processor 801 may implement or perform the processing-related methods, steps, and logical block diagrams disclosed in the embodiments of this application.

The steps of the method disclosed with reference to the embodiments of this application may be directly performed by a hardware decoding processor, or performed by a combination of hardware in a decoding processor and a software module. The software module may be located in a mature storage medium in the art, for example, a random access memory, a read-only memory, a programmable read only memory, or an electrically erasable programmable read only memory (electrically erasable programmable read only memory, EEPROM). The storage medium is located in the storage 804, and the processor 801 reads information in the storage 804 and completes the steps of the foregoing method in combination with hardware in the processor.

The processor 801, the storage 804, and the communication interface 803 may communicate with each other through the communication line 802.

In the foregoing embodiments, instructions stored in the storage for execution by the processor may be implemented in a form of a computer program product. The computer program product may be written into the storage in advance, or may be downloaded and installed in the storage in a form of software.

An embodiment of this application further provides a computer program product, including one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium accessible by the computer, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)).

An embodiment of this application further provides a computer-readable storage medium. All or some of the methods described in the foregoing embodiments may be implemented by using software, hardware, firmware, or any combination thereof. The computer-readable medium may include a computer storage medium and a communication medium, and may further include any medium that enables a computer program to be transmitted from a place to another place. The storage medium may be any target medium accessible by a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc, and the magnetic disk usually reproduces data magnetically, while the optical disc reproduces data optically by using a laser.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

## Claims

1. A power consumption control method, wherein the method comprises:

opening, by a terminal device, a first application, wherein when a load level of the terminal device is a first level, a CPU power consumption parameter PL1 is a first value, or when a load level of the terminal device is a second level, the CPU power consumption parameter PL1 is a second value;

at a first moment, the CPU power consumption parameter PL1 is the first value, and the first application lags;

at a second moment, the CPU power consumption parameter PL1 is a third value, wherein the second moment is later than the first moment, and the third value is greater than the first value;

starting from the second moment, after first preset duration, at a third moment, the CPU power consumption parameter PL1 is a fourth value, wherein the fourth value is greater than the first value, the fourth value is less than the third value, and the load level is the first level between the first moment and the third moment;

at a fourth moment, the CPU power consumption parameter PL1 is the second value, and the first application lags;

at a fifth moment, the CPU power consumption parameter PL1 is the fifth value, wherein the fifth moment is later than the fourth moment, and the fifth value is greater than the second value; and

starting from the fifth moment, after second preset duration, at a sixth moment, the CPU power consumption parameter PL1 is a sixth value, wherein the sixth value is greater than the second value, the sixth value is less than the fifth value, and the load level is the second level between the fourth moment and the sixth moment; and

at a seventh moment, exiting, by the terminal device, the first application, and opening the first application again, wherein if the load level of the terminal device is the first level, the CPU power consumption parameter PL1 is the fourth value, or if the load level of the terminal device is the second level, the CPU power consumption parameter PL1 is the sixth value, wherein the seventh moment is later than the sixth moment.

2. The method according to claim 1, comprising:

collecting CPU power consumption between the second moment and the third moment based on a first sampling period, to obtain N CPU power consumption values;

determining a first CPU power consumption adaptation value based on the N CPU power consumption values;

obtaining a first offset, wherein the first offset is a difference between the first CPU power consumption adaptation value and the first value, and

after the third moment, exiting, by the terminal device, the first application, and opening the first application again, wherein if the load level of the terminal device is the first level, the CPU power consumption parameter PL1 is the fourth value obtained by adding the first value and the first offset.

3. The method according to claim 2, comprising:

collecting CPU power consumption between the fifth moment and the sixth moment based on a second sampling period, to obtain M CPU power consumption values;

determining a second CPU power consumption adaptation value based on the M CPU power consumption values;

obtaining a second offset, wherein the second offset is a difference between the second CPU power consumption adaptation value and the second value, and

after the sixth moment, exiting, by the terminal device, the first application, and opening the first application again, wherein if the load level of the terminal device is the second level, the CPU power consumption parameter PL1 is the sixth value obtained by adding the second value and the second offset.

4. The method according to claim 3, wherein the CPU power consumption parameter PL1 value of the first application is controlled by a second application, the first offset and the second offset are managed by the second application, and the method further comprises:

resetting both the first offset and the second offset when the second application is exited.

5. The method according to claim 4, comprising:

at an eighth moment, exiting, by the terminal device, the second application, and opening the second application again, wherein the eighth moment is later than the seventh moment; and

at a ninth moment, opening, by the terminal device, the first application, wherein when the load level of the terminal device is the first level, the CPU power consumption parameter PL1 is the first value, or when the load level of the terminal device is the second level, the CPU power consumption parameter PL1 is the second value; and the ninth moment is later than the eighth moment.

6. The method according to claim 4 or 5, wherein the second application comprises a system performance monitoring module, a scene scheduling module, and a CPU power consumption collection module;

between the first moment and the second moment, the system performance monitoring module determines that the lag event is a user-perceivable lag event;

at the second moment, the scene scheduling module sets the CPU power consumption parameter PL1 to the third value;

starting from the second moment, within the first preset duration, the scene scheduling module performs power consumption sampling on a CPU through the CPU power consumption collection module;

at the third moment, the scene scheduling module sets the CPU power consumption parameter PL1 to the fourth value;

between the fourth moment and the fifth moment, the system performance monitoring module determines that the lag event is a user-perceivable lag event;

at the fifth moment, the scene scheduling module sets the CPU power consumption parameter PL1 to the fifth value;

starting from the fifth moment, within the second preset duration, the scene scheduling module performs power consumption sampling on the CPU through the CPU power consumption collection module;

at the sixth moment, the scene scheduling module sets the CPU power consumption parameter PL1 to the sixth value; and

at the seventh moment, the terminal device exits the first application, and opens the first application again, and if the load level of the terminal device is the first level, the scene scheduling module sets the CPU power consumption parameter PL1 to the fourth value, or if the load level of the terminal device is the second level, the scene scheduling module sets the CPU power consumption parameter PL1 to the sixth value.

7. The method according to any one of claims 6, wherein that the system performance monitoring module determines that the lag event is a user-perceivable lag event comprises:
when a delay of the lag event exceeds third preset duration, the system performance monitoring module determines, based on an event flag Flags, that the lag event is a user-perceivable lag event.

8. The method according to any one of claims 1-7, wherein a lag type of the lag comprises one or more of the following: mouse delay lag, input delay lag, and window unresponsiveness lag.

9. The method according to any one of claims 1-8, comprising: when the load level of the terminal device remains unchanged, different application scenes correspond to different CPU power consumption parameters PL1.

10. A terminal device, comprising a storage and a processor, wherein the storage is configured to store a computer program, and the processor is configured to execute the computer program, to perform the power consumption control method according to any one of claims 1-9.

11. A computer-readable storage medium, wherein the computer-readable storage medium stores instructions, and when the instructions are executed, a computer is enabled to perform the power consumption control method according to any one of claims 1-9.

12. A computer program product, comprising a computer program, wherein when the computer program is run, a terminal device is enabled to perform the power consumption control method according to any one of claims 1-9.

Wireless communication module
BT/WLAN/GNSS/NFC/IR/FM
[160]

Speaker
[170A]

Receiver
[170B]

Microphone
[170C]

Headset jack
[170D]

Audio
module
[170]

Displays 1~N [194]

Processor
[110]

External memory
interface [120]

Internal memory
[121]

Key [190]

Indicator [192]

Cameras 1~N
[193]

USB interface [130]

Charging input

Charging
management
module
[140]

Power
management
module [141]

Battery [142]

FIG. 1

**Application layer**

**Computer Manager**

- System performance monitoring module
- Scene scheduling module
- CPU power consumption collection module

| Office | Browser | Social |
|--------|---------|--------|
| Music | Videos | Games |
| Environment subsystem | | ... |

**User mode**

⇕

**Subsystem dynamic link library**

API module | Windows (windows) API | Windows native API

⇕

**Execution body**

| Process manager | Virtual memory manager | I/O manager |
|-----------------|------------------------|-------------|
| Power manager | Operating system event driver node | ... |

⇕

**Kernel and device driver**

**Kernel mode**

Kernel

**Device driver**

| Graphics card driver | Audio driver | Video driver |
|----------------------|--------------|--------------|
| Camera driver | Keyboard driver | ... |

⇕

**Hardware abstraction layer**

| Bluetooth module | WIFI module | Hardware configuration module | ... |

FIG. 2

| Lag detection module | Scene scheduling module | CPU power consumption collection module |

**Original solution**

Send a lag event →

Lock, for preset duration, PL1 to be a lag high-performance parameter

**Optimized solution**

Send a lag event →

Lock, for preset duration, PL1 to be a lag high-performance parameter

Obtain current CPU power consumption →

Return the current CPU power consumption

FIG. 3

Scene 1: Office scene

**System performance monitoring module**

Start

S401: Monitor a lag event

S402: Parse content of the lag event

S403:
Is a lag delay greater than preset
lag duration?

Y

S404:
Determine, based on
Flags, whether the lag event is a user-
perceivable lag event

Y

S405: Generate content of the lag event

S406: Encapsulate a lag IPC message

**Scene scheduling module**

S407: Receive the lag IPC message

S408: Is the office scene
in a lag scene?

Y

N

S409: Set the office scene to the lag scene, set a
lag status value, deliver a lag policy parameter,
and set PL1 to a relatively large value

S410: Create a timer with preset timing
duration, and not modify a value of PL1 within
the preset timing duration

S411: Collect actual CPU power consumption

S412: Does the timer expire?

Y

S413: Calculate a first adaptation value and a
first offset

S414: Reset the lag status value, and re-identify
a scene

S415: When the application scene is still an
office scene, update PL1 to an adjustment value

End

FIG. 4

EP 4 546 141 A1

Scene 2: Browser scene

System performance monitoring module

```
                    ┌─────────────┐
                    │    Start    │
                    └─────────────┘
                           │
                           ▼
        ┌──────────────────────────────────────┐
        │   S501: Monitor a lag event          │
        └──────────────────────────────────────┘
                           │
                           ▼
        ┌──────────────────────────────────────┐
        │   S502: Parse content of the lag event│
        └──────────────────────────────────────┘
                           │
                           ▼
               S503: Is a
         lag delay greater than preset lag
               duration?
                           │ Y
                           ▼
               S504:
         Determine, based on
         Flags, whether the lag event is a user-
               perceivable lag event
                           │ Y
                           ▼
        ┌──────────────────────────────────────┐
        │   S505: Generate content of the lag event│
        └──────────────────────────────────────┘
                           │
                           ▼
        ┌──────────────────────────────────────┐
        │   S506: Encapsulate a lag IPC message │
        └──────────────────────────────────────┘
```

Scene scheduling module

```
        ┌──────────────────────────────────────┐
        │   S507: Receive the lag IPC message   │
        └──────────────────────────────────────┘
                           │
                           ▼
               S508: Is
         the browser scene in a lag        ── Y ──┐
               scene?                              │
                           │ N                     │
                           ▼                       │
        ┌──────────────────────────────────────┐  │
        │ S509: Set the browser scene to the lag│  │
        │ scene, set a lag status value, deliver│  │
        │ a lag policy parameter, and set PL1 to│  │
        │ a relatively large value              │  │
        └──────────────────────────────────────┘  │
                           │                       │
                           ▼                       │
        ┌──────────────────────────────────────┐  │
        │ S510: Create a timer with preset      │  │
        │ timing duration, and not modify a     │  │
        │ value of PL1 within the preset timing │  │
        │ duration                              │  │
        └──────────────────────────────────────┘  │
                           │                       │
                           ▼                       │
        ┌──────────────────────────────────────┐  │
        │ S511: Collect actual CPU power        │  │
        │ consumption                           │  │
        └──────────────────────────────────────┘  │
                           │                       │
                           ▼                       │
               S512: Does the timer expire?        │
                           │ Y                     │
                           ▼                       │
        ┌──────────────────────────────────────┐  │
        │ S513: Calculate a second adaptation   │  │
        │ value and a second offset             │  │
        └──────────────────────────────────────┘  │
                           │                       │
                           ▼                       │
        ┌──────────────────────────────────────┐  │
        │ S514: Reset the lag status value, and │  │
        │ re-identify a scene                   │  │
        └──────────────────────────────────────┘  │
                           │                       │
                           ▼                       │
        ┌──────────────────────────────────────┐  │
        │ S515: When the application scene is   │  │
        │ still a browser scene, update PL1 to  │  │
        │ an adjustment value                   │  │
        └──────────────────────────────────────┘  │
                           │                       │
                           ▼                       ▼
                    ┌─────────────┐
                    │     End     │◄──────────────
                    └─────────────┘
```

FIG. 5

A terminal device opens a first application, where when a load level of the terminal device is a first level, a CPU power consumption parameter PL1 is a first value, or when a load level of the terminal device is a second level, a CPU power consumption parameter PL1 is a second value — S601

At a first moment, the CPU power consumption parameter PL1 is the first value, and the first application lags — S602

At a second moment, the CPU power consumption parameter PL1 is a third value, where the second moment is later than the first moment, and the third value is greater than the first value — S603

Starting from the second moment, after first preset duration, at a third moment, the CPU power consumption parameter PL1 is a fourth value, where the fourth value is greater than the first value, the fourth value is less than the third value, and the load level is the first level between the first moment and the third moment — S604

At a fourth moment, the CPU power consumption parameter PL1 is the second value, and the first application lags — S605

At a fifth moment, the CPU power consumption parameter PL1 is a fifth value, where the fifth moment is later than the fourth moment, and the fifth value is greater than the second value — S606

Starting from the fifth moment, after second preset duration, at a sixth moment, the CPU power consumption parameter PL1 is a sixth value, where the sixth value is greater than the second value, the sixth value is less than the fifth value, and the load level is the second level between the fourth moment and the sixth moment — S607

At a seventh moment, the terminal device exits the first application, and opens the first application again, where if the load level of the terminal device is the first level, the CPU power consumption parameter PL1 is the fourth value, or if the load level of the terminal device is the second level, the CPU power consumption parameter PL1 is the sixth value, where the seventh moment is later than the sixth moment — S608

FIG. 6

PL1

Relatively large value
(third value) of PL1 after adjustment

50

35    35    35    35    35

40

Average power
consumption
(fourth value) in a
sampling period

30

20

17

8  Offset OFFSET

10    9

Initial value (first value) of PL1 in an office scene

Time

0      1      2      3      4      5

FIG. 7

800

Chip

801

Processor

804

802

Storage

803

Communication
interface

FIG. 8

## INTERNATIONAL SEARCH REPORT

| | International application No. |
|---|---|
| | **PCT/CN2023/120658** |

| A. CLASSIFICATION OF SUBJECT MATTER |
|---|
| G06F 11/30(2006.01)i |
| According to International Patent Classification (IPC) or to both national classification and IPC |

| B. FIELDS SEARCHED |
|---|
| Minimum documentation searched (classification system followed by classification symbols) |
| IPC: G06F H04L |
| Documentation searched other than minimum documentation to the extent that such documents are included in the fields searched |
| |
| Electronic data base consulted during the international search (name of data base and, where practicable, search terms used) |
| CNABS, CNTXT, DWPI, ENTXTC, ENTXT, CNKI, IEEE: 参数, 场景, 等级, 调整, 负载, 工作模式, 功耗, 功率, 功率限值, 功率限制, parameter, scene, level, adjust, load, mode, power consumption, power, power limit |

| C. | DOCUMENTS CONSIDERED TO BE RELEVANT | |
|---|---|---|
| Category* | Citation of document, with indication, where appropriate, of the relevant passages | Relevant to claim No. |
| X | CN 110928587 A (LENOVO (BEIJING) CO., LTD.) 27 March 2020 (2020-03-27) description, paragraphs 0052-0114, and figures 1-4 | 1-12 |
| A | CN 101430595 A (INTERNATIONAL BUSINESS MACHINES CORP.) 13 May 2009 (2009-05-13) entire document | 1-12 |
| A | CN 108710558 A (BEIJING XIAOMI MOBILE SOFTWARE CO., LTD.) 26 October 2018 (2018-10-26) entire document | 1-12 |
| A | CN 110825199 A (LENOVO (BEIJING) CO., LTD.) 21 February 2020 (2020-02-21) entire document | 1-12 |
| A | CN 112685258 A (LENOVO (BEIJING) CO., LTD.) 20 April 2021 (2021-04-20) entire document | 1-12 |
| A | US 2013173946 A1 (ROTEM, E. et al.) 04 July 2013 (2013-07-04) entire document | 1-12 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 December 2023** | **18 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
| :---: | :---: | :---: |
| Information on patent family members | | PCT/CN2023/120658 |

| Patent document cited in search report | | | Publication date (day/month/year) | Patent family member(s) | | | Publication date (day/month/year) |
| :---: | :---: | :---: | :---: | :---: | :---: | :---: | :---: |
| CN | 110928587 | A | 27 March 2020 | None | | | |
| CN | 101430595 | A | 13 May 2009 | JP | 2009116862 | A | 28 May 2009 |
| | | | | JP | 5235590 | B2 | 10 July 2013 |
| | | | | US | 2009125737 | A1 | 14 May 2009 |
| | | | | US | 8006108 | B2 | 23 August 2011 |
| | | | | CN | 101430595 | B | 20 April 2011 |
| CN | 108710558 | A | 26 October 2018 | None | | | |
| CN | 110825199 | A | 21 February 2020 | None | | | |
| CN | 112685258 | A | 20 April 2021 | None | | | |
| US | 2013173946 | A1 | 04 July 2013 | None | | | |

Form PCT/ISA/210 (patent family annex) (July 2022)

**EP 4 546 141 A1**

**Patent documents cited in the description**

- CN 202211405854